Europäisches Patentamt

**European Patent Office**

Office européen des brevets

(19)

(11) Numéro de publication : **0 029 780
B1**

(12) **FASCICULE DE BREVET EUROPÉEN**

(45) Date de publication du fascicule du brevet :
29.02.84

(21) Numéro de dépôt : **80401657.4**

(22) Date de dépôt : **19.11.80**

(51) Int. Cl.³ : **H 04 N  5/13**, H 04 N  7/04

(54) **Equipement d'essai de téléviseur récepteur de vidéographie.**

(30) Priorité : **22.11.79 FR 7929335**

(43) Date de publication de la demande :
**03.06.81 Bulletin 81/22**

(45) Mention de la délivrance du brevet :
**29.02.84 Bulletin 84/09**

(84) Etats contractants désignés :
**AT BE CH DE GB IT LI NL SE**

(56) Documents cités :
**DE-A- 2 655 133
FR-A- 2 390 862
US-A- 3 898 564
US-A- 4 097 697
NHK LABORATORIES NOTE, no. 216, septembre
1977, Tokyo JP Y. NUMAGUCHI et al.: "Compatibility
and transmission characteristics of digital signals
inserted in the field-blanking interval of a television
signal", pages 1-13
NACHRICHTENTECHNISCHE ZEITSCHRIFT, vol. 30,
no. 3, mars 1977, Berlin DE F. PILZ: "Übertragung
zusätzlicher Informationen, insbesondere von Texten, in ungenutzten Zellen der Vertikal-Austastlücke
des Fernsehsignals", pages 225-228
IEEE TRANSACTIONS ON CONSUMER ELECTRO-
NICS, vol. CE-25, no. 3, juillet 1979, New York US R.A.
O'CONNOR: "Teletext field tests", pages 304-310.**

(73) Titulaire : **L'Etat Français représenté par le Secrétaire d'Etat aux Postes et Télécommunications
(Centre National d'Etudes des Télécommunications)
38-40 rue du Général Leclerc
F-92131 Issy-les-Moulineaux (FR)**

**Etablissement Public de Diffusion dit "Télédiffusion
de France"
21-27 rue Barbès
F-92120 Montrouge (FR)**

(72) Inventeur : **Noirel, Yves Maurice
Le Chesnot Breteil
F-35160 Montfort (FR)**
Inventeur : **Biineau, Joseph
1, Square René Coty
F-35000 Rennes (FR)**
Inventeur : **Leray, Pierre
11, rue Locmariaquer
F-35000 Rennes (FR)**
Inventeur : **Bauduin, Jean-Pierre
Lieu dit Riniac
F-35270 Combourg (FR)**

(74) Mandataire : **Le Guen, Louis François et al
13, rue Emile Bara BP 91
F-35802 Dinard Cedex (FR)**

Jouve, 18, rue St-Denis, 75001 Paris, France

## Equipement d'essai de téléviseur récepteur de vidéographie

La présente invention concerne un équipement d'essai du démodulateur d'un téléviseur récepteur de vidéographie. Plus particulièrement, l'invention concerne un équipement d'essai dans lequel on affiche un diagramme de l'œil sur l'écran du tube du récepteur de télévision, permettant d'apprécier la qualité du démodulateur du récepteur.

Les systèmes de vidéographie, lesquels permettent d'afficher sur un écran de récepteur de télévision des pages de textes ou des données graphiques, sont maintenant bien connus. Ainsi, à titre d'exemple, on peut citer, en France, le système appelé « ANTIOPE » ou, au Royaume-Uni le système appelé « CEEFAX ». Dans ces systèmes, les informations a afficher se présentent sous forme de paquets de données numériques, qui sont insérés dans la partie active des lignes de télévision. En France le système de télédiffusion de données appelé « DIDON » effectue l'insertion et la transmission de ces paquets de données numériques.

Les premières expériences, en vraie grandeur, de transmission de vidéographie ont montré que les différents maillons de la chaîne de transmission, c'est-à-dire les émetteurs de signaux de télévision, le trajet hertzien et les récepteurs de télévision du réseau public, s'ils étaient bien adaptés pour transmettre des images et le son, peuvent présenter des insuffisances en ce qui concerne la transmission des données numériques. Des remèdes peuvent relativement aisément être apportés aux émetteurs qui sont en relativement petit nombre et qui sont entretenus par un personnel hautement qualifié. Par contre, les téléspectateurs sont en possession de récepteurs de télévision qui diffèrent entre eux par l'âge, la technologie, etc. Or, un service de vidéographie doit pouvoir, particulièrement s'il s'agit d'un service public, être accessible à tous, et, par ailleurs, au cours des expériences mentionnées ci-dessus, on a pu constater que les démodulateurs des récepteurs de télévision constituaient le maillon le plus fragile de la chaîne de transmission.

En conséquence, un objet de la présente invention consiste à prévoir un équipement d'essai permettant de tester un démodulateur de récepteur de télévision, utilisable dans un système quelconque de vidéographie.

Pour estimer les performances du démodulateur vis-à-vis du bruit et des décalages de l'instant d'échantillonnage, on utilise, comme on le fait dans les systèmes de transmission de données classiques, un diagramme représentant sur un intervalle de temps centré autour de l'instant d'échantillonnage, toutes les valeurs que le signal est susceptible de prendre. La partie centrale de ce diagramme a une forme analogue à celle d'un œil d'où la dénomination « diagramme de l'œil ». En général, on fait apparaître le diagramme de l'œil sur un oscilloscope. Toutefois, on peut utiliser également l'écran d'un tube à rayons cathodiques d'un récepteur de télévision, comme cela est, par exemple, mentionné dans le rapport technique de M. G. Groll intitulé « CEEFAX : Measurement techniques » paru dans la revue BBC Record, N° 6, 1977, pages 4 à 7, ou la conférence de J. P. Chambers intitulé « Measurement and specification of teletext waveforms », parue dans la revue IBC 76, pages 117 à 121.

Un autre objet de l'invention consiste à prévoir un équipement d'essai de démodulateur de récepteur de télévision pour faire apparaître le diagramme de l'œil, concernant le démodulateur, sur l'écran du tube du même récepteur de télévision.

Suivant une caractéristique de l'invention, il est prévu un équipement d'essai d'un démodulateur d'un téléviseur récepteur de vidéographie comprenant un générateur de signaux numériques d'essai délivrant des paquets de données pseudo-aléatoires avec une première fréquence d'éléments binaires à un modulateur HF dont la sortie est reliée à l'entrée HF du téléviseur, et un récepteur comportant un circuit de régénération de données à seuil variable commandable, l'entrée dudit récepteur étant reliée à la sortie vidéo dudit démodulateur, dans lequel ledit générateur émet des paquets de données pseudoaléatoires avec deux éléments binaires de durée double à deux instants prédéterminés $t_1$ et $t_2$ de chaque paquet et en ce que ledit circuit de régénération des données comprend des moyens pour faire varier son seuil ligne par ligne d'une valeur maximale à une valeur minimale, ledit récepteur comportant encore une horloge d'échantillonnage ayant une seconde fréquence plus basse que la première dans le rapport $(n-2)/n$, où n est égal au rapport entier de la première fréquence à la fréquence ligne du téléviseur récepteur de vidéographie, des moyens pour assurer la resynchronisation de l'horloge d'échantillonnage au milieu de chaque ligne et un circuit de réception de données pseudo-aléatoires, dont la sortie délivrant un signal numérique pour chaque erreur détectée est reliée à l'entrée vidéo du téléviseur.

Suivant une autre caractéristique, le générateur comprend des moyens pour engendrer une ligne de référence de données où tous les éléments binaires sont des 1 et le récepteur comprend des moyens pour détecter ladite ligne de référence et des premiers moyens pour évaluer la valeur maximale du niveau de la ligne de référence, ladite valeur maximale étant utilisée dans un générateur de rampe dont la sortie fixe le seuil dudit circuit de régénération des données.

Les caractéristiques de l'invention mentionnées ci-dessus, ainsi que d'autres, apparaîtront plus clairement à la lecture de la description d'un exemple de réalisation, ladite description étant faite en relation avec les dessins joints, parmi lesquels :

la Figure 1a est un bloc-diagramme de l'équipement d'essai, suivant l'invention, associé à un récepteur de télévision à tester,

la Figure 1b est un bloc-diagramme d'un récepteur de vidéographie associé à un téléviseur,

la Figure 2 est le bloc-diagramme du générateur de signaux utilisé dans l'équipement de la Fig. 1,

les Figures 3a à 3e sont des formes d'ondes illustrant le fonctionnement d'un circuit du générateur de la Fig. 2,

la Figure 4 est le bloc-diagramme du récepteur de traitement des signaux utilisés dans l'équipement de la Fig. 1,

la Figure 5 est un schéma du détecteur de ligne de référence du récepteur de la Fig. 4,

les Figures 6a à 6e sont des formes d'onde illustrant le fonctionnement du circuit de la Fig. 5,

la Figure 7 est le schéma du circuit de régénération de salve du récepteur de la Fig. 4,

la Figure 8 est le schéma du compteur de lignes et du générateur de rampe du récepteur de la Fig. 4,

la Figure 9 est un diagramme montrant la rampe de tension délivrée par le générateur de rampe de la Fig. 8,

la Figure 10 est le schéma du circuit de marquage de tension moyenne du récepteur de la Fig. 4,

la Figure 11 est le schéma du circuit de mise en phase initiale du récepteur de la Fig. 4,

les Figures 12a et 12b sont des formes d'onde illustrant le fonctionnement du récepteur de la Fig. 4,

les Figures 13a à 13h sont des formes d'ondes illustrant le fonctionnement du circuit de la Fig. 11,

la Figure 14 est le schéma du circuit de resynchronisation du récepteur de la Fig. 4,

les Figures 15a à 15c sont des formes d'onde illustrant le fonctionnement du circuit de la Fig. 14, et

la Figure 16 représente un diagramme de l'œil affiché dans le cas d'un signal de réception idéal.

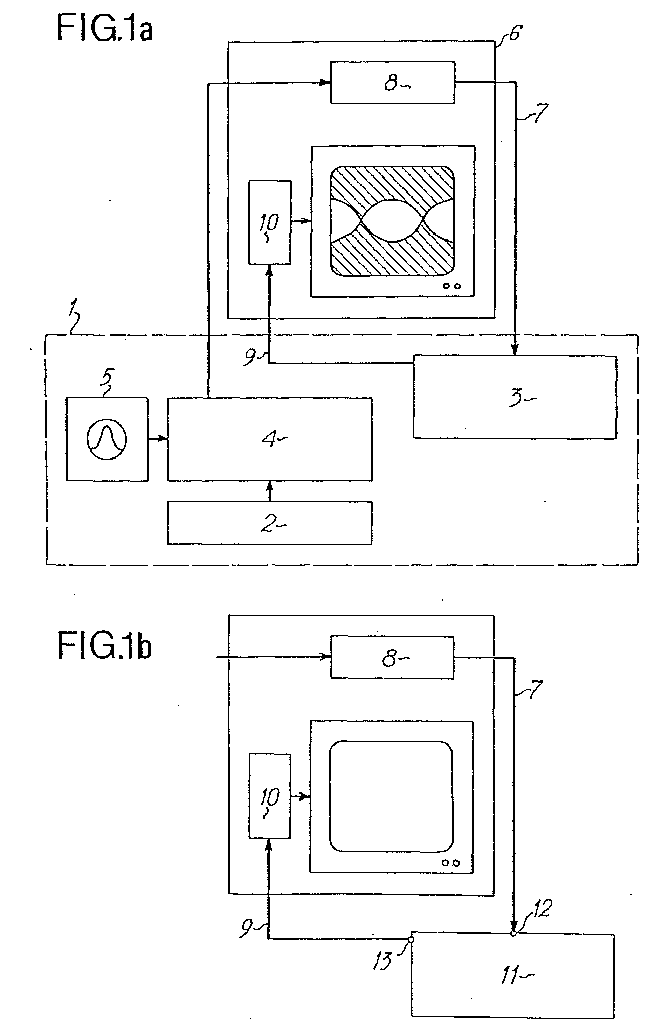

L'équipement d'essai 1 de la Fig. 1a comprend un générateur de signaux de test 2, un récepteur de traitement de signal de test 3, un modulateur 4 et un oscillateur 5. Une sortie vidéo du générateur 2 est reliée à l'entrée de modulation du modulateur 4 dont l'entrée de porteuse est reliée à la sortie de l'oscillateur 5. La sortie haute-fréquence du modulateur 4 est reliée à l'entrée HF du récepteur de télévision 6 à tester. La sortie vidéo 7 du démodulateur 8 du récepteur 6 est reliée à l'entrée du récepteur 3. La sortie du récepteur de traitement 3 est reliée à l'entrée vidéo 9 des circuits vidéo 10 du récepteur de télévision 6.

A la Fig. 1b, on a, de plus, montré un récepteur de données de télétexte 11 dont l'entrée 12 peut être reliée à la sortie vidéo 7 du démodulateur 8 et dont la sortie 13 peut être reliée à l'entrée vidéo 9 des circuits vidéo 10.

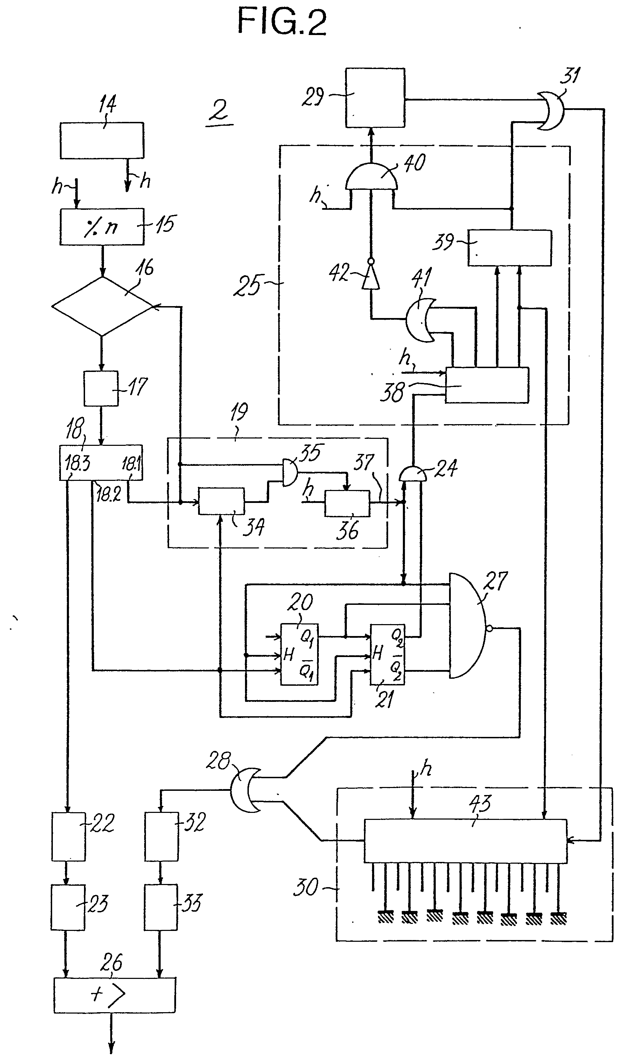

A la Fig. 2 le générateur de signaux de test 2 comprend un oscillateur à quartz 14 dont la sortie h délivre ce qu'il est convenu d'appeler le signal d'horloge, qui est distribué aux autres circuits du générateur 2. Un diviseur programmable 15 a sa sortie reliée à une première entrée d'un comparateur de phase 16 dont la sortie est reliée à l'entrée de commande d'un oscillateur commandable par la tension 17, dont la sortie est reliée à l'entrée d'un générateur de synchronisation de télévision 18. Le générateur de synchronisation 18 a une première sortie reliée, d'une part, à la seconde entrée du comparateur de phase 16 et, d'autre part, à une entrée de signal d'un circuit 19, une seconde sortie reliée, d'une part, à une entrée de commande du circuit 19 et, d'autre part, à l'entrée RAZ d'un circuit formé de deux bascules 20 et 21 en série, et une troisième sortie reliée à l'entrée d'un circuit de réglage de niveau 22 dont la sortie est reliée à l'entrée d'un circuit de mise en forme 23. La sortie du circuit 19 est reliée, d'une part, à l'entrée d'une porte ET 24 dont la sortie est reliée à l'entrée d'un circuit de base de temps 25 et, d'autre part, à l'entrée d'horloge des bascules 20 et 21. La sortie du circuit 23 est reliée à une première entrée d'un amplificateur additionneur 26. A l'entrée D de la bascule 20, on suppose qu'un « 1 » est appliqué. La sortie Q2 de la bascule 21 est reliée à la seconde entrée de la porte ET 24. La sortie du circuit 19, la sortie Q1 de 20 et la sortie $\overline{Q2}$ de 21 sont respectivement reliées aux entrées d'une porte NON-ET à trois entrées 27 dont la sortie est reliée à une entrée d'une porte OU 28. Une première sortie du circuit de base de temps 25 est reliée à l'entrée d'un générateur de données numériques pseudo-aléatoires 29 et une seconde sortie de 25 est reliée à une entrée d'initialisation d'un circuit 30. La sortie du générateur 29 est reliée à une entrée d'une porte OU 31 dont la sortie est reliée à l'entrée de données du circuit 30, auquel le signal d'horloge est également appliqué. La sortie du circuit 30 est reliée à la seconde entrée de la porte OU 28 dont la sortie est reliée à un circuit de réglage de niveau de données 32 dont la sortie est reliée à l'entrée d'un circuit de mise en forme 33 dont la sortie est reliée à la seconde entrée de l'amplificateur 26. La sortie de l'amplificateur 26 constitue la sortie du générateur de signaux de test 2.

L'oscillateur à quartz 14 délivre le signal d'horloge h à la fréquence $F_{eb}$, c'est-à-dire la fréquence des éléments binaires. Le diviseur 15 est un diviseur numérique programmable capable de diviser la fréquence du signal reçu de l'oscillateur 14 par le nombre entier n. Le signal de sortie de 15 définit la fréquence de l'oscillateur 17, qui sera la fréquence ligne du signal de télévision engendré par le générateur de signaux de test 2. La structure de la boucle de verrouillage de fréquence de l'oscillateur 17 comprenant le comparateur de phase 16, l'oscillateur 17, le générateur 18 et la liaison du générateur 18 à 16 est classique et son fonctionnement est bien connu. Le générateur de synchronisation 18 reçoit de 17 les signaux à la fréquence ligne et en déduit, comme dans un émetteur de télévision, sur ses première et seconde sorties 18.1 et 18.2 des signaux logiques de synchronisation ligne et trame et sur sa troisième sortie 18.3 un signal de synchronisation mélangé complet conformes au standard du réseau de télédiffusion de données à tester.

La seconde sortie 18.2 du générateur 18 est également reliée à une entrée du circuit 19 qui reçoit également les signaux d'horloge de l'oscillateur 14. Le circuit 19 comprend un premier compteur 34 dont l'entrée de comptage est reliée à la première sortie de 18 et l'entrée d'initialisation à la seconde sortie de 18. La sortie du compteur 34 est reliée à une entrée d'une porte ET 35 dont la seconde entrée est reliée à la première sortie 18.1 de 18. La sortie de la porte ET 35 est reliée à l'entrée de validation d'un second compteur 36 comportant une entrée d'horloage et dont la sortie 37 est celle du circuit 19. Le compteur 34 qui reçoit les signaux de synchronisation trame et ligne de 18 a sa sortie activée uniquement pour les lignes visibles. Le compteur 36 a sa sortie activée uniquement pendant la durée utile d'une ligne, c'est-à-dire qu'elle n'est pas activée pendant environ 10,5 microsecondes au début de la ligne, ainsi qu'après 63,5 microsecondes, ce qui s'obtient facilement par comptage. La sortie 37 délivre donc des éléments binaires « 1 », pour chaque ligne visible, entre l'instant de début d'un paquet et la fin d'un paquet de durée maximale. Il en résulte que le circuit 19 délivre des « 1 » pour chaque ligne visible pendant la durée de la ligne réservée à la transmission des paquets.

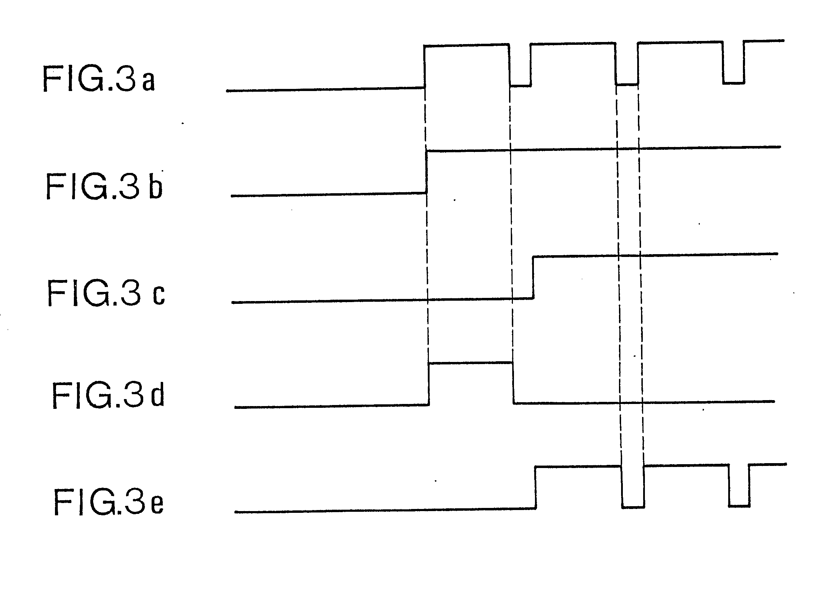

La bascule 20 est remise à zéro à chaque réception de la synchronisation trame. Quand le premier signal d'horloge, qui correspond à l'insertion de la première ligne, provient de 19, comme le montre la Fig. 3a, et est appliqué à 20, sa sortie Q passe à 1, Fig. 3b, l'état de la bascule 21 n'étant pas modifié. La sortie de la porte 27 délivre alors un signal correspondant à celui montré à la Fig. 3d. A la réception du second signal provenant de 19, la bascule 21 change d'état, comme le montre la Fig. 3c. La porte 27 se trouve inhibée pour toutes les lignes suivantes. Par contre, la porte 24 qui était inhibée au cours de la première ligne est ouverte pour les lignes suivantes, comme le montre la Fig. 3e.

Le circuit de base de temps 25 comprend un compteur 38 recevant l'horloge h et du circuit 24 une validation pour chaque ligne visible, sauf la première. Pour la clarté de l'exposé, on a figuré le compteur 38 sous la forme d'un registre comportant autant de points de sortie que d'éléments binaires porteurs d'information dans une ligne. Le premier point de sortie est relié à l'entrée de mise à 1 d'une bascule 39 tandis que le dernier point de sortie est relié à l'entrée de mise à 0 de cette bascule. La sortie 1 de la bascule 39 est reliée, d'une part, à une entrée d'une porte ET 40 à trois entrées et, d'autre part, à la seconde entrée de la porte OU 31. Par ailleurs, deux points de sortie particuliers a et b, dont on verra comment ils sont déterminés dans la suite, sont respectivement reliés aux entrées d'une porte OU 41 dont la sortie est reliée, par l'intermédiaire d'un inverseur 42, à la seconde entrée de la porte ET 40. La troisième entrée de la porte ET 40 reçoit les signaux d'horloge h. La sortie de la porte ET 40 est reliée à l'entrée du générateur de données numériques pseudo-aléatoires 29. Le générateur 29 délivre ainsi, pour chaque signal d'horloge passant par la porte ET 40, un élément binaire faisant partie d'une séquence aléatoire. Pour les instants élémentaires correspondant aux points de sorties a et b du compteur 38 reliés à la porte OU 41, le générateur 29 délivre le même signal qu'à l'instant précédent. Avant l'instant correspondant au premier point de sortie et après l'instant correspondant au dernier point de sortie, la porte OU 31, étant donné son entrée reliée à la sortie Q qui est alors à 0, de la bascule 39, délivre des 0.

En fait, dans l'exemple décrit, le générateur 29 fournit une séquence pseudo-aléatoire de 2 047 éléments binaires obtenue par la division modulo deux du polynôme « 1 suivi d'une infinité de zéros » par le polynôme $x^{11} + x^2 + 1$. Cette séquence n'est pas contenue un nombre entier de fois dans une trame et donne une structure animée. On pourrait figer cette structure en réinitialisant le diviseur au début de chaque trame.

Le circuit 30 comprend un registre à décalage 43 ayant une capacité de deux octets comportant des entrées de chargement parallèles reliées alternativement à une source de tension et à la masse, ce qui permet d'y introduire au chargement deux octets ayant chacun la composition suivante : 10101010. L'entrée de chargement initial du registre 43 est reliée au premier point de sortie du compteur 38. Le registre 43, qui reçoit les signaux d'horloge à son entrée de décalage, se vide vers la porte OU 28. A chaque sortie d'un élément binaire de 43, un nouvel élément binaire est écrit en provenance de la sortie de la porte 31, c'est-à-dire provenant de 29 ou de 39.

Les circuits de réglage de niveau 22 et 32, ainsi que les circuits de mise en forme 23 et 33 sont des circuits classiques dans le domaine technique de la télévision et des transmissions de données. L'amplificateur 26 est un adaptateur d'impédance.

Il résulte de la description ci-dessus que, dans chaque trame, en ce qui concerne la partie visible de l'image, le générateur de signaux de test 2 délivre une première ligne dont la partie utile se compose de « 1 » provenant du circuit 21, à travers 28, puis une suite de lignes dont la partie utile se compose de deux octets de synchronisation d'éléments binaires, puis d'une séquence d'éléments binaires pseudo-aléatoire.

Comme on l'a dit plus haut, le signal de sortie de 2 sert de signal modulant dans le modulateur 4 qui délivre le signal modulé à l'entrée HF du récepteur de télévision 6 à tester. Dans ce dernier, le signal est démodulé dans le démodulateur 8, pour être appliqué au récepteur 3.

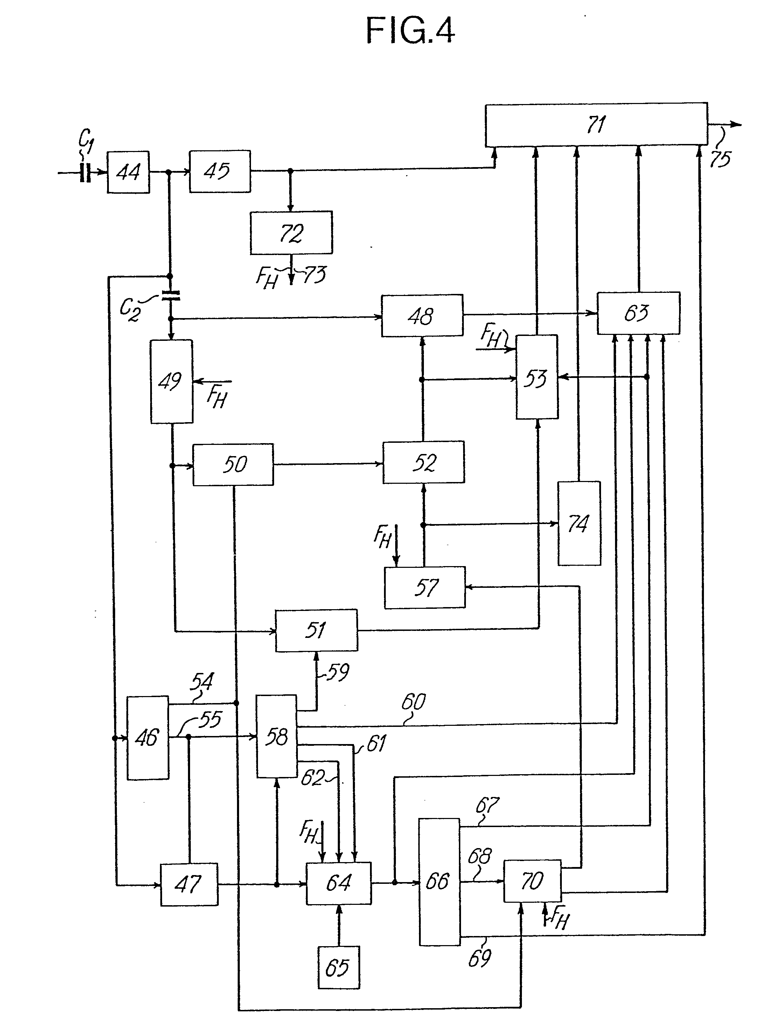

Le récepteur de signaux de test 3, Fig. 4, comprend un amplificateur vidéo 44 auquel le signal vidéo est appliqué à travers un condensateur C1 et dont la sortie est respectivement reliée à l'entrée d'un circuit d'extraction de synchronisation 45, à une armature d'un condensateur C2, à l'entrée d'un circuit détecteur 46 et à l'entrée d'un circuit de régénération de salve 47. La seconde armature du condensateur C2 est reliée, d'une part, à l'entrée d'un circuit de découpage des données 48 et, d'autre part, à l'entrée d'un circuit de clampage 49, dont la sortie est reliée, d'une part, à l'entrée d'un circuit d'échantillonnage de valeur maximale 50 et, d'autre part, à l'entrée d'un circuit d'échantillonnage de valeur moyenne 51.

La sortie du circuit d'échantillonnage 50 est reliée à l'entrée d'un circuit générateur de rampe 52 dont la sortie est reliée, d'une part, à l'entrée de commande du circuit de découpage 48 et, d'autre part, à l'entrée de commande d'un circuit de marquage de valeur moyenne de la salve 53. La sortie du circuit 51 est reliée à l'entrée de signal du circuit 53.

Le circuit détecteur 46 comprend deux sorties 54 et 55. La sortie 54 délivre un signal de détection de la ligne de référence et est reliée, d'une part, à l'entrée de commande du circuit 50 et, d'autre part, à une entrée d'initialisation d'un compteur de lignes 57. La sortie 55 de 46 délivre un signal pour chaque ligne utile, autre que la première, et est reliée à l'entrée d'initialisation d'un circuit de comptage 58. La sortie 55 délivre également un signal de validation et est reliée à l'entrée de commande du circuit de régénération 47.

Le circuit de comptage 58 comprend quatre sorties 59 à 62. La sortie 59 délivre un signal vers l'entrée de commande du circuit d'échantillonnage 51. La sortie 60 délivre un signal de déclenchement et est reliée à une entrée de commande d'un circuit de détection des erreurs 63. Les sorties 61 et 62 délivrent des signaux de commande à des moments différents et sont respectivement reliées aux entrées de commande correspondantes d'un circuit de mise en phase 64.

L'entrée de signal du circuit de phasage 64 est reliée à la sortie d'un oscillateur stable, par exemple à quartz, 65. Par ailleurs, le circuit 64 a encore une entrée de commande reliée à la sortie du circuit de régénération de salve 47 et une entrée de commande à laquelle est appliquée un signal à la fréquence ligne $F_H$. La sortie du circuit de phasage 64 est reliée, d'une part, à une entrée d'horloge du circuit 63 et, d'autre part, à l'entrée d'un compteur d'éléments binaires 66. La sortie du circuit 47 est également reliée à l'entrée de commande du circuit de comptage 58.

Le compteur d'éléments binaires 66 comporte trois sorties 67 à 69. La sortie 67 délivre un signal de validation et est reliée à une entrée de commande du circuit 63 et à une entrée d'initialisation du circuit 53. La sortie 68 délivre un signal indiquant le milieu des lignes et est reliée à un circuit générateur d'un signal de resynchronisation 70. La sortie 69 est reliée à une entrée de signal d'un circuit engendrant le signal de visualisation 71.

La sortie du circuit d'extraction de synchronisation 45 est reliée, d'une part, à une entrée de signal du circuit 71 et, d'autre part, à l'entrée d'un circuit séparateur 72 délivrant, à sa sortie 73 un signal à la fréquence ligne $F_H$.

La sortie du circuit de découpage des données 48 est reliée à l'entrée de données du circuit de détection d'erreur 63. La sortie du compteur de lignes 57, qui en pratique comprend un faisceau de fils, est reliée, d'une part, à l'entrée correspondante du circuit générateur de rampe 52 et, d'autre part, aux entrées correspondantes d'une mémoire de marquage 74 dont la sortie est reliée à une entrée de signal du circuit 71.

L'amplificateur vidéo 44 constitue l'étage d'entrée délivrant la vidéo sous impédance très faible. Le condensateur C1 à l'entrée de 44 empêche la transmission de la composante continue. Le circuit 45 extrait du signal vidéo la synchronisation complète qui est réinjectée dans le circuit de mélange 71 qui peut ainsi délivrer, par 75, un signal vidéo complet pour le tube d'affichage. Par ailleurs, le circuit 72 permet d'obtenir, à partir de la synchro complète, le signal à fréquence ligne $F_H$ utilisé dans le circuit de clampage 49, le circuit de phasage 64, le circuit de resynchronisation 70, et le compteur lignes 57.

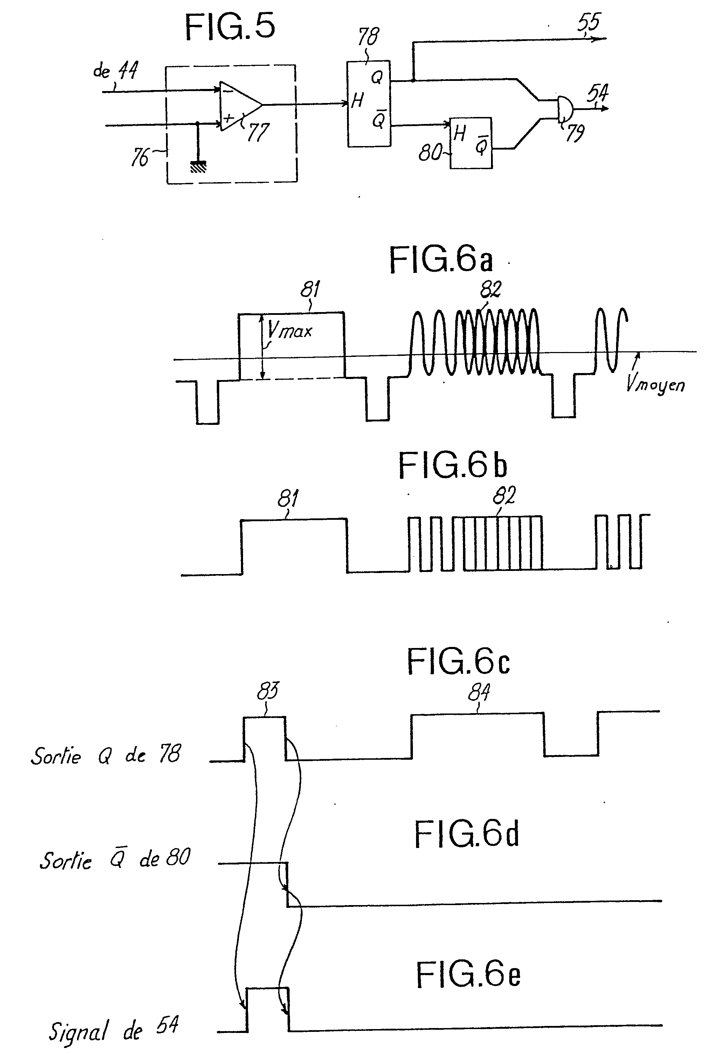

Le circuit 46 sert à détecter la première ligne formée de « 1 » ainsi que les débuts des paquets. Un exemple de réalisation du circuit 46 est montré à la Fig. 5. Il comprend un comparateur 76, formée d'un amplificateur 77 dont l'entrée − est reliée à la sortie de 44 et l'entrée + à la masse. La sortie de 77 est reliée à l'entrée d'un circuit monostable 78 dont la sortie Q est reliée, d'une part, à la sortie 55 et, d'autre part, à une entrée d'une porte ET 79 dont la sortie est reliée à la sortie 54. La sortie $\overline{Q}$ de 78 est reliée à l'entrée d'un circuit monostable 80 dont la sortie $\overline{Q}$ est reliée à la seconde entrée de la porte 79.

Le signal de la Fig. 6a représente le signal provenant de 44 au moment de l'arrivée de la ligne de référence 81, suivie de lignes utiles 82. Ce signal ne comprend pas de composante continue. La ligne 81 ne comprend que des « 1 », d'où son amplitude constante. La valeur moyenne du signal de la Fig. 6a est indiquée par $V_{moyen}$. L'entrée + de 77 étant au potentiel de la masse, la sortie de 77 délivre le signal de la Fig. 6b, c'est-à-dire les parties de signal appliqué au-dessus de la valeur moyenne. La constante de temps du monostable 78 est choisie égale à quelques microsecondes (moins de 10 microsecondes) et, de plus, le monostable 78 est supposé redéclenchable. Il en résulte que la première transition de la ligne 81 engendre le créneau 83 dont la durée est égale à la constante de temps de 78, mais que, pour les lignes suivantes, le monostable reste à l'état de travail toute la ligne et même au-delà, comme l'indique le créneau 84. Le front descendant de 83 déclenche le monostable 80 dont la constante de temps est légèrement inférieure à la durée d'une trame, ce qu'indique la courbe 6d. Le signal de sortie de la porte 79 a donc l'allure de la Fig. 6e.

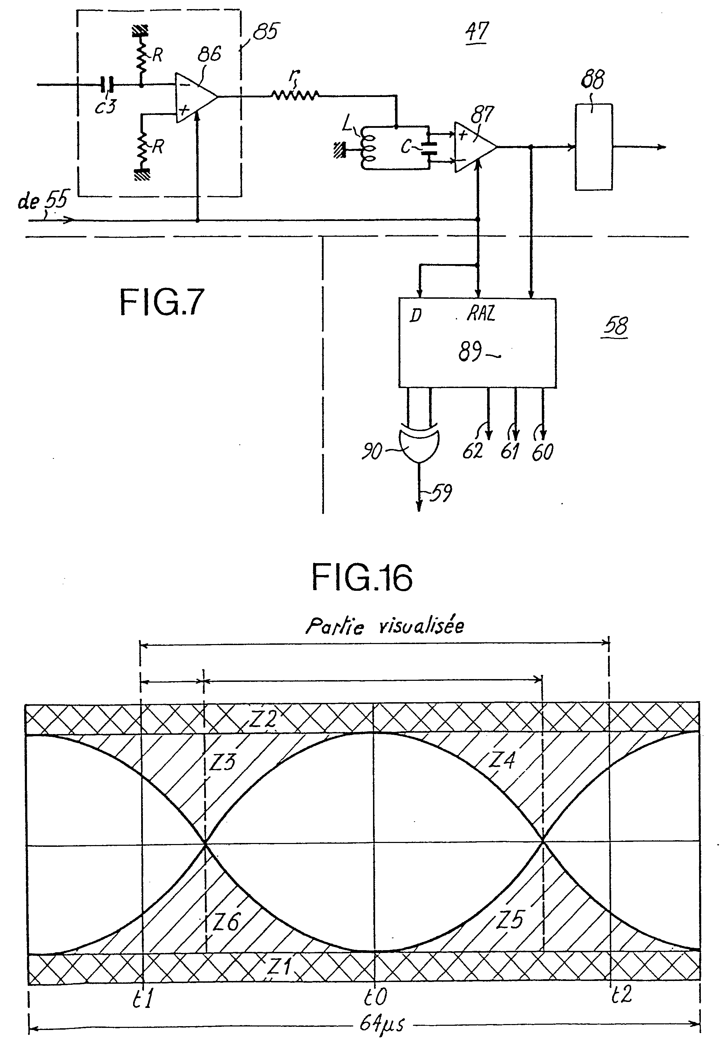

La Fig. 7 montre un exemple de réalisation des circuits 47 et 58. Le circuit 47 comporte un comparateur 85 formé d'un amplificateur différentiel 86 dont l'entrée − est reliée à la sortie de 44 par un condensateur C3. En courant continu, l'entrée + est à la masse par une résistance R ainsi que l'entrée −. La sortie de 86 est reliée, par une résistance de liaison r, à un circuit LC, le point milieu de l'inductance L étant à la masse et les armatures du condensateur C étant respectivement reliées aux entrées − et + d'un amplificateur différentiel 87. Le circuit LC est accordé sur 3,1 MHz pour éliminer les composantes de bruit, soit la modulation parasite de la largeur des créneaux. Les entrées de validation des amplificateurs différentiels sont reliées à la sortie 55 de 46. Ainsi, le signal filtré par le circuit LC est redécoupé dans 87 dont la sortie est reliée, d'une part, à travers un circuit 88 monostable fonctionnant sur les transitions, à une entrée de signal du circuit de phasage 64 et, d'autre part, dans le circuit 58, à l'entrée d'horloge d'un registre à décalage 89. Le registre à décalage 89 comporte huit étages. Deux sorties du registre 89 sont respectivement reliées aux entrées d'une porte OU exclusif 90 dont la sortie est reliée à l'entrée de commande du circuit d'échantillonnage 51. En pratique, la sortie 59 de la porte OU 90 définit un créneau de temps pendant lequel le circuit 51 détermine la valeur moyenne du signal qui lui est appliqué pendant le même temps. Une autre sortie 60 du registre 89 détermine, en fin de salve, le début de l'analyse des données et, à ce titre, est reliée au circuit 63. Deux autres sorties 61 et 62 de 89 sont reliées au circuit de phasage 64. Par ailleurs, les entrées RAZ et D de 89 sont reliées à la sortie 55.

Le circuit de clampage 49 est un circuit classique permettant de définir un niveau 0 volt pour le noir pour les signaux de ligne appliqués aux circuits 50 et 51.

Le circuit d'échantillonnage 50 se compose, par exemple, d'un échantillonneur bloqueur qui intègre dans un condensateur la tension de crête du signal 81 de la Fig. 6a pendant la durée du créneau 83 qui lui est appliqué à partir de la sortie 54 de 58. Puis ce circuit 50 délivre en permanence une tension égale à celle mise en mémoire dans le condensateur, soit la tension maximale $V_{max}$ de la courbe 81. Le circuit 51 comprend un filtre passe-bas suivi d'un échantillonneur bloqueur qui est activé pendant le créneau de temps défini par la sortie 59 de la porte OU 90, Fig. 7.

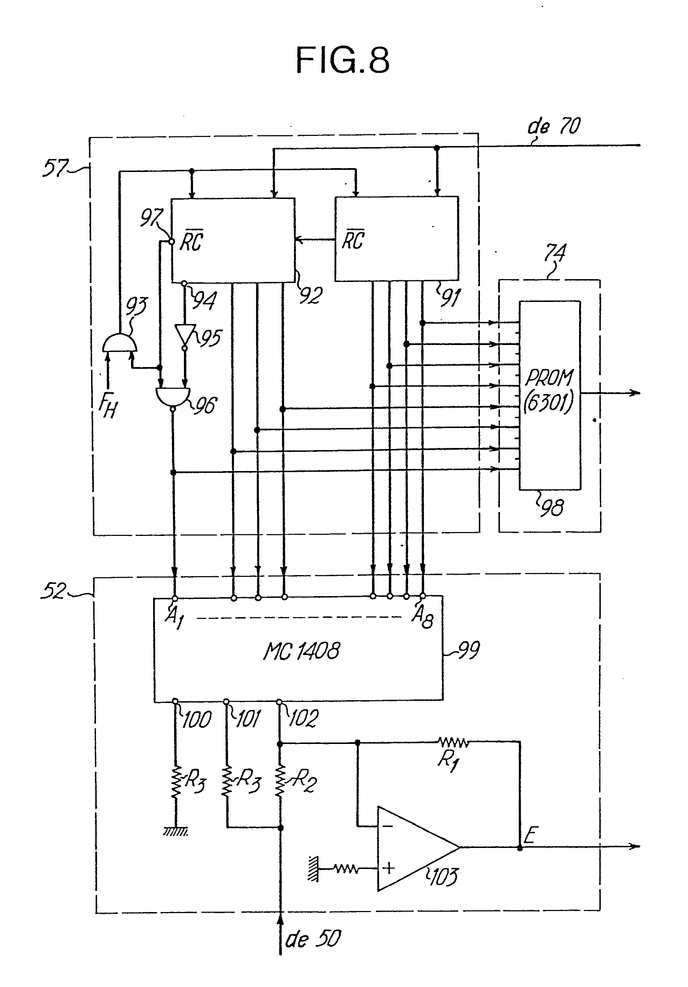

Le compteur de lignes 57, Fig. 8, se compose de deux compteurs binaires à quatre étages 91 et 92 montés en série. Les entrées d'initialisation des compteurs sont reliés à une sortie de 70 et sont chargés au maximum au début de chaque trame, soit pour l'ensemble des compteurs à 255. Le circuit 57 comprend encore une porte ET 93 dont une entrée reçoit le signal de fréquence ligne $F_H$ et dont la sortie est appliquée aux entrées de décomptage de 91 et 92. La sortie de poids fort 94 du compteur 92 est reliée à l'entrée d'un inverseur 95 dont la sortie est reliée à une entrée d'une porte NON-ET 96 dont la seconde entrée, comme la seconde entrée de la porte ET 93, est reliée à la sortie de retenue 97 du compteur 92. Les sorties de compte du compteur 91 et celles du compteur 92, sauf la sortie de poids fort 94, sont reliées en parallèle, ainsi que la sortie de la porte NON-ET 96, d'une part, aux entrées correspondantes d'une mémoire PROM 98 du circuit 74 et, d'autre part, aux entrées correspondantes de données numériques d'un convertisseur numérique-analogique 99 du générateur de rampe 52.

Tant que le contenu des compteurs 91 et 92 est supérieur ou égal à 128, les sorties 94 et 97 sont chacune à « 1 », donc, étant donné l'inverseur 95, on a un « 1 » et un « 0 » sur les entrées de 96, qui délivre un « 1 ». Quand le contenu des compteurs est inférieur ou égal à 127, la sortie 94 est à « 0 », donc les deux entrées de 96 sont à « 1 » et 96 délivre un « 0 ». Donc, en ce qui concerne la mémoire 98 et le convertisseur 99, pendant le décomptage, tout se passe comme si leurs entrées de poids forts étaient directement reliées à 94. Quand le contenu des compteurs est nul, à la fin du décomptage, la sortie de retenue 97 passe à « 0 », donc les entrées sont maintenant « 0 » et « 1 », et 96 délivre un « 1 », ce qui revient à appliquer la valeur 128 aux entrées de 98 et 99, jusqu'au prochain chargement des compteurs à la trame suivante.

Le convertisseur numérique-analogique 99 est un convertisseur par exemple du type MC 1408 commercialisé par la société MOTOROLA et a une borne 100 reliée à la masse par une résistance de valeur R3, une borne 101 reliée à la sortie du circuit 50 délivrant la tension $V_{max}$ par l'intermédiaire d'une résistance de valeur R3, et une borne 102 reliée, d'une part, à la sortie de 50 par une résistance de valeur $R_2$ et, d'autre part, à l'entrée − d'un amplificateur opérationnel 103, monté en additionneur. L'entrée + de 103 est reliée à la masse par une résistance appropriée et sa sortie est reliée à son entrée − par une résistance de valeur R1. La borne 102 délivre un courant égal à − (a × $V_{max}$/R3), dans lequel le coefficient a est donné par la formule suivante :

$$a = A^1/2 + A^2/4 + A^3/8 + ... + A^8/256$$

où $A^1$ à $A^8$ désignent les valeurs binaires appliquées aux entrées du même nom du convertisseur 99. Donc a varie par $1/256^e$ de 0 à 255/256, soit pratiquement de 0 à 1.

La tension E à la sortie de l'amplificateur 103 est donnée par la formule suivante :

$$E = (R1/R3) \, a \, V_{max} − (R1/R2) \, V_{max}$$

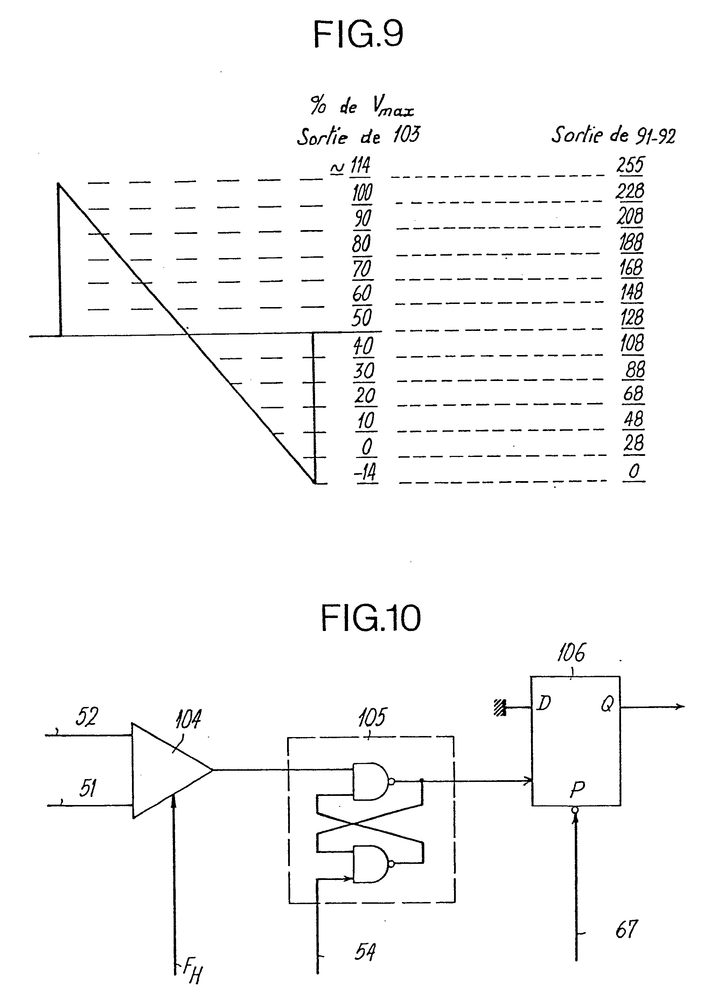

Dans un exemple de réalisation, on a choisi les valeurs des résistances R1 à R3, telles que R1 = 1 792 ohms, R2 = 12 800 ohms et R3 = 1 400 ohms, ce qui conduit à la variation linéaire de E en fonction de a, montrée à la Fig. 9. Au début du comptage, c'est-à-dire de la partie visible de la trame, on a :

$$a \simeq 1 \text{ d'où } E = (114/100)\, V_{max}$$

et à la fin du comptage, c'est-à-dire à la fin de la partie visible de la trame, on a :

$$a = 0 \text{ d'où } E = - (14/100)\, V_{max}$$

Il apparaît donc que la rampe délivrée par le circuit 52 varie linéairement de $1,14\, V_{max}$ à $- 0,14\, V_{max}$. Comme on le verra dans la suite, une telle rampe a été choisie pour assurer, au début de l'analyse des erreurs, un seuil de décision supérieur au niveau maximal des signaux vidéo et, à la fin de l'analyse, un seuil de décision négatif.

A la droite de la Fig. 9, on a indiqué, dans une première colonne, les valeurs (au coefficient $V_{max}/100$ près) de E variant, entre 0 et 100, de 10 en 10. Dans une deuxième colonne, on a indiqué les valeurs des adresses de la mémoire 98 pour lesquelles celle-ci délivre un signal de marquage vers le circuit 71. Il apparaît clairement que, lors du décomptage des compteurs 91 et 92, chaque fois que le compte de sortie atteint une valeur de la seconde colonne mentionnée ci-dessus, la ligne correspondante se trouve marquée sur l'écran du téléviseur. On notera que les valeurs choisies correspondent à un marquage tous les 10 % entre les valeurs 0 et 100 de la première colonne.

La Fig. 10 représente le schéma du circuit de marquage de la tension moyenne $V_{moyen}$. Le circuit 53 comprend un amplificateur différentiel 104 dont une entrée de signal est reliée à la sortie du générateur de rampe 52, dont l'autre entrée de signal est reliée à la sortie du circuit 51 délivrant la valeur $V_{moyen}$, et dont l'entrée de validation est reliée à la sortie $F_H$. La sortie de l'amplificateur 104 est reliée à l'entrée d'une bascule RS 105 dont la seconde entrée est reliée à la sortie 54. La sortie Q de la bascule 105 est reliée à l'entrée d'horloge d'une bascule D 106 dont la sortie Q est reliée au circuit 71 et dont l'entrée d'initialisation P est reliée à la sortie de 67 du compteur 66.

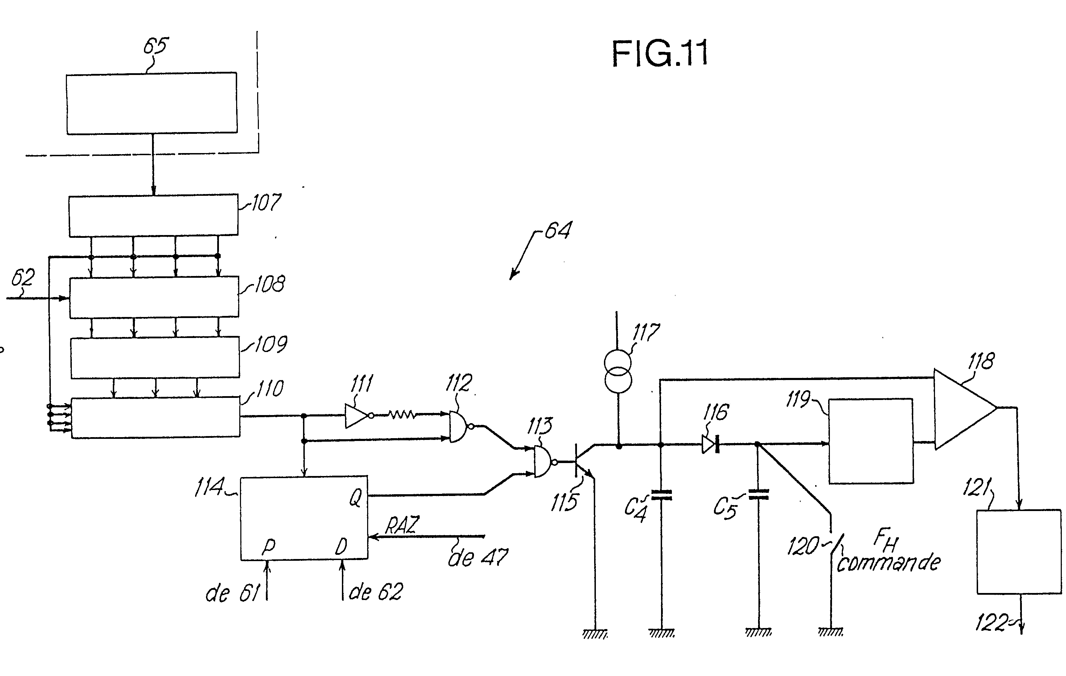

La Fig. 11 représente le circuit de mise en phase initiale 64, ainsi que l'horloge locale de réception 65. Par ailleurs, les Figs. 12a et 12b sont respectivement les diagrammes de temps de l'horloge du signal reçu et de l'horloge d'échantillonnage de réception. L'horloge du signal reçu est, à la phase près, l'horloge de l'oscillateur 14, Fig. 2, et a une fréquence égale à $nf_H$. L'horloge d'échantillonnage de réception a une fréquence définie par la fréquence de l'oscillateur local 65, cette fréquence étant choisie égale à $(n-2)\text{-}f_H$. Quand on réalise pratiquement au départ de chaque paquet une mise en phase sur deux impulsions correspondantes des horloges des courbes 12a et 12b, on a ensuite tout au long de la ligne un décalage qui varie linéairement entre les deux horloges. Le but du circuit 64 est de créer un déphasage constant des signaux fournis par l'oscillateur 65 et le circuit de régénération de salve 47, de manière à obtenir cette mise en phase initiale. Dans le récepteur, l'horloge du signal reçu est délivrée par le circuit 47 de régénération de la salve des deux octets de synchronisation. Dans le circuit 64, la sortie de l'oscillateur 65 est reliée à une ligne à retard 107 comportant quatre sorties respectivement décalées de T/8, où T est la période de l'oscillateur 65. Ces quatre sorties sont respectivement reliées aux quatre entrées du registre 108. L'état de ces sorties est mémorisé sur la commande 62, caractéristique de la phase de la salve. L'état du registre décodé par le décodeur 109 adresse un multiplexeur 110 qui sélectionne la phase convenable de 107. On obtient ainsi un préphasage, le signal délivré par le multiplexeur 110 étant un signal dont la phase est voisine de celle de la salve, à moins de T/8 près.

La sortie du multiplexeur 110 est reliée, d'une part, à l'entrée d'un inverseur 111 dont la sortie est reliée à l'entrée d'une porte NON-ET 112 dont la sortie est reliée à l'entrée d'une porte NON-ET 113, d'autre part, à la seconde entrée de la porte NON-ET 112 et, enfin, à l'entrée d'horloge d'une bascule D 114. La sortie Q de la bascule 114 est reliée à la seconde entrée de la porte NON-ET 113, son entrée D est reliée à la sortie 62 du compteur 58, son entrée P·de mise à 1 reliée à la sortie 61 de 58 et son entrée RAZ reliée à la sortie de 47. La sortie de la porte 113 est reliée à la base d'un transistor 115 dont l'émetteur est à la masse et le collecteur relié respectivement à l'anode d'une diode 116, à la masse par un condensateur C4, à la sortie d'un générateur de courant 117 et à une entrée de signal d'un comparateur 118. La cathode de 116 est reliée à la masse par un condensateur C5, à l'entrée d'un échantillonneur 119 dont la sortie est reliée à la seconde entrée du comparateur 118, et, enfin, à un contact d'un interrupteur 120. L'interrupteur 120 est commandé à la fréquence ligne $f_H$.

La sortie du comparateur 118 est reliée à l'entrée d'un monostable 121 qui délivre le signal d'horloge de réception 122.

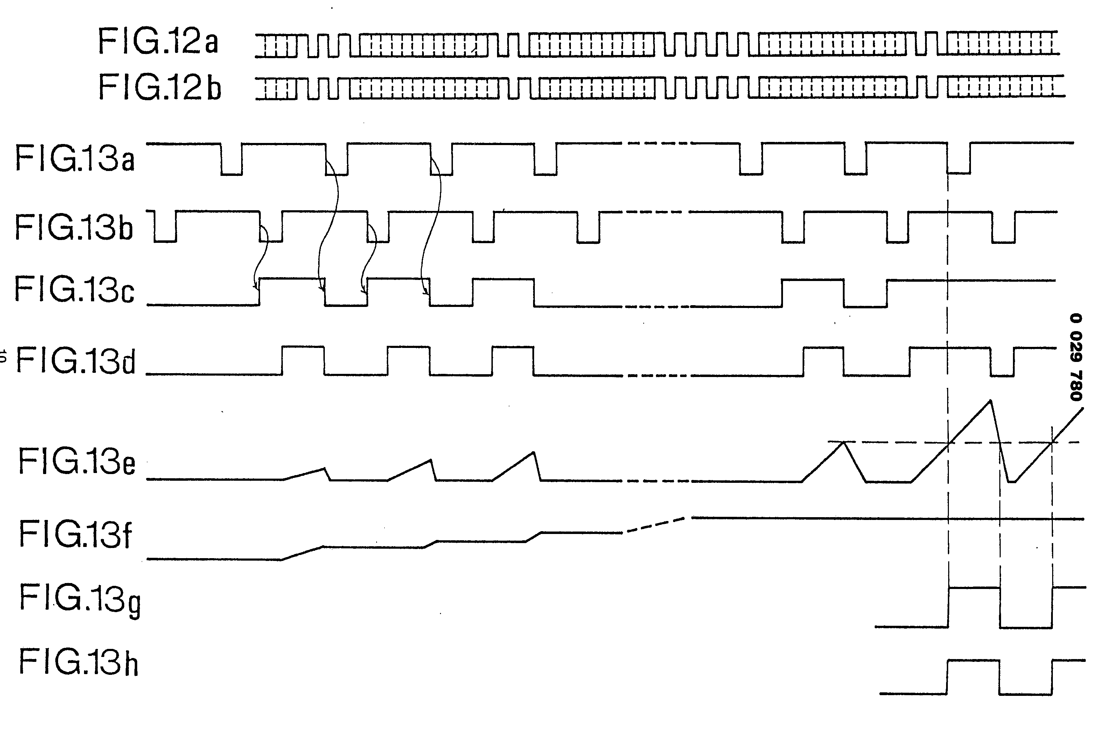

La Fig. 13a représente les impulsions obtenues à partir des transitions de la salve à la sortie de 88 et qui sont actives à l'entrée RAZ de 114 à partir de la quatrième impulsion. La Fig. 13b représente les impulsions obtenues sur les fronts montants de l'horloge appliquée à l'entrée d'horloge de 114. En pratique, les impulsions de la Fig. 13b sont fabriquées d'une manière classique par l'inverseur 111 et la porte 112. Elles sont appliquées à la porte 113.

La Fig. 13c représente la forme d'onde du signal à la sortie Q de 114. La Fig. 13d représente la forme d'onde du signal à la sortie de la porte 113. La Fig. 13e représente la forme d'onde du signal sur l'anode de 116, c'est-à-dire la tension de charge du condensateur C4. La Fig. 13f représente la forme d'onde du signal sur la cathode de 116, c'est-à-dire la tension de charge du condensateur C5.

Le temps T qui s'écoule entre le front montant de l'horloge, Fig. 13b, et une transition sur la salve, Fig. 13a, est calculé par la bascule D 114. Le créneau obtenu, Fig. 13d, est converti en tension par la charge du condensateur C5 pendant le temps correspondant, ce qui, avant la fin de la salve, conduit à une dent de scie dont la valeur crête $V_T$ est directement fonction de la largeur du créneau. Cela est vrai quand le condensateur C4 est chargé à la crête, la diode 116 ne conduisant plus. Cette valeur crête est mise en mémoire dans l'échantillonneur bloqueur 119 et va servir ensuite de valeur de référence. En effet, au 16e élément binaire de la salve, l'entrée P de 114 reçoit un signal du circuit de comptage 58, ce qui force la sortie Q à 1, comme le montre la Fig. 13c. Donc le créneau de la Fig. 13d s'élargit et la dent de scie de la Fig. 13e dépasse la valeur $V_T$. Au moment où elle dépasse cette valeur, le comparateur 118 délivre un front ascendant, Fig. 13g, qui est rigoureusement en phase avec le front ascendant des impulsions de la Fig. 13a. Ensuite les créneaux finals de la Fig. 13c sont répétés, donc également les dernières dents de scie dépassant $V_T$ si bien que les instants de basculement du comparateur 118 forment les instants d'échantillonnage. Enfin le circuit monostable 121 reçoit les fronts montants délivrés par le comparateur 118 et délivrent des impulsions, Fig. 13h, de largeur constante.

Bien entendu la mise en phase étant ainsi assurée à la fin de la salve, on a, dans la suite de la ligne, un décalage linéaire progressif, comme on l'a mentionné plus haut, étant donné que la fréquence de l'oscillateur 65 égale à $(n - 2)F_H$ est inférieure à la fréquence du signal reçu égale à $nF_H$.

Le circuit de base de temps 66 est constitué par un compteur dont les sorties 67 à 69 correspondent à des comptes prédéterminés.

Le circuit de resynchronisation 70, Fig. 14, comprend un compteur 123 dont l'entrée de déclenchement de chargement est reliée à la sortie 54 du détecteur 46 et dont l'entrée d'horloge reçoit le signal $F_H$. La sortie « max » du compteur 123 est reliée à l'entrée d'horloge d'une bascule D 124 dont l'entrée D est à la masse et l'entrée P reliée à la sortie 68 de la base de temps 66, la sortie 68 indiquant le milieu de ligne. La sortie Q de la bascule 124 est reliée, d'une part, à l'entrée correspondante du circuit 63 et, d'autre part, à l'entrée d'horloge d'une bascule D 125 dont l'entrée D est à la masse et l'entrée P à la sortie d'un inverseur 126 à l'entrée duquel est appliqué $F_H$. La sortie Q de la bascule 125 est reliée aux entrées de chargement des compteurs 91 et 92, Fig. 8.

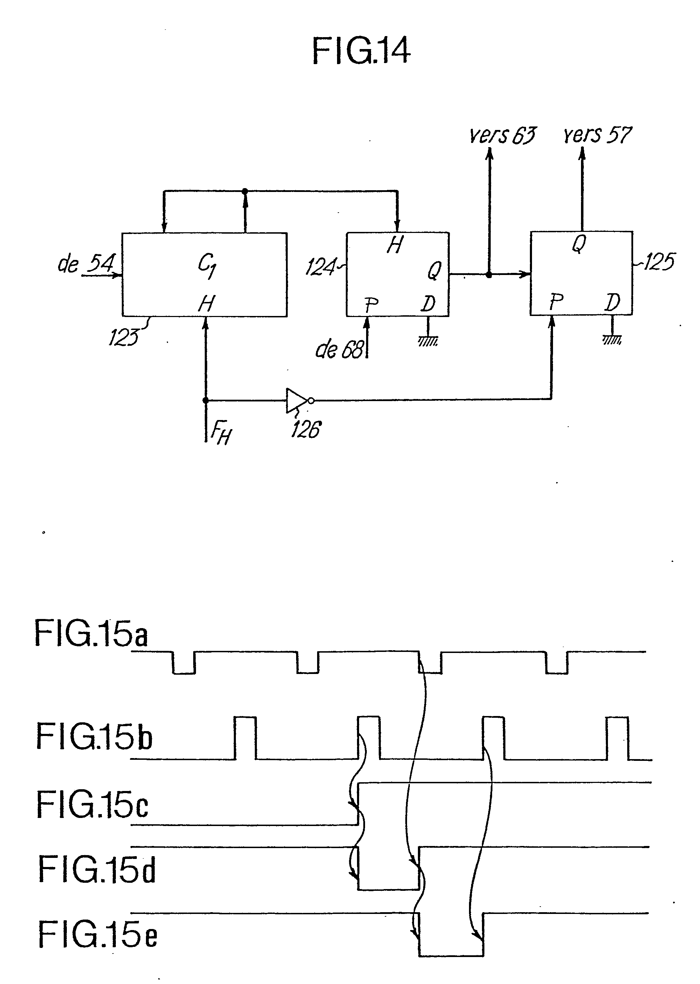

La Fig. 15a est un diagramme montrant les impulsions de milieu de ligne délivrées par 68. Le diagramme de la Fig. 15b montre les impulsions à la fréquence ligne $F_H$. Le diagramme de la Fig. 15c montre le changement d'état de la sortie du compteur 123 quand il a atteint son maximum.

En pratique, le compteur 123 fonctionne en circuit à retard. En effet, dans une image de télévision, il y a 275 lignes visibles, mais, comme la capacité des compteurs 91 et 92 n'est que de 255, on ne peut traiter que 255 lignes. Le retard fourni par le compteur 123 permet de centrer les 255 lignes traitées dans les 275 lignes visibles. Les fonctions des bascules 124 et 125 sont évidentes.

La resynchronisation du circuit 63, qui est un récepteur de données pseudo-aléatoires, ne peut être faite que si l'on introduit 11 éléments binaires corrects dans le multiplicateur de ce circuit. Cette situation a le maximum de chance de se produire si le seuil de découpage des données délivré par le circuit 52 est égal à la moitié de $V_{max}$, c'est-à-dire voisin de $V_{moyen}$ et si l'instant d'échantillonnage est au milieu de l'élément binaire. C'est pourquoi on force la première condition de la fin d'une trame au début de la suivante, comme le montre la Fig. 9, par la sortie 97, Fig. 8. La deuxième condition existe au voisinage du milieu d'une ligne de télévision qui est l'instant défini par le circuit de la Fig. 14.

Le diagramme de la Fig. 16 permet d'illustrer le fonctionnement de l'appareil de test. Par ailleurs de la description qui précède, il apparaît que le seuil de découpage du signal numérique dans le circuit 48 varie de manière linéaire, suivant la rampe délivrée par 52 et en synchronisme avec le balayage trame du téléviseur. Ce seuil varie entre des valeurs extrêmes qui encadrent le signal numérique reçu. De plus, l'instant d'échantillonnage des données délivrées par 48 varie linéairement en synchronisme avec le balayage ligne du téléviseur, étant donné comme le montrent les Fig. 12a et 12b que la fréquence d'échantillonnage à la réception est légèrement inférieure à la fréquence des éléments binaires à l'émission, la différence étant de deux périodes par ligne.

Sur le diagramme de la Fig. 16, au temps 10, qui correspond au milieu de ligne délivré par 70, l'instant d'échantillonnage est correct tandis qu'aux temps t1 et t2, les instants d'échantillonnage correspondent respectivement au début et à la fin d'un élément binaire. A noter qu'aux instants t1 et t2, l'horloge d'émission prend un coup d'avance sur l'horloge de réception. Cependant le nombre d'éléments binaires émis doit rester identique au nombre des éléments binaires traités dans le récepteur, c'est pourquoi, aux mêmes instants t1 et t2, l'élément binaire émis à une durée double, ce qui est obtenu par 41, Fig. 2.

A la Fig. 16, dans la zone Z1, qui correspond à la partie de la rampe, Fig. 9, inférieure à 0, tous les éléments binaires échantillonnés sont évidemment égaux à 1, ce qui entraîne un taux d'erreur de 50 %. Dans la zone Z2, symétriquement, tous les éléments échantillonnés sont égaux à 0 et le taux d'erreurs est encore égal à 50 %. Dans la zone Z3, l'élément binaire à échantillonner sera toujours présent, sauf dans le cas d'une transition montante, et c'est seulement dans ce cas qu'il y aura une erreur. Dans cette zone, les combinaisons 00, 11, 10 n'entraînent pas d'erreurs et seule la combinaison 01 conduit à échantillonner un 0 à la place du 1. Donc, dans cette zone, le taux d'erreur est de 25 %. Il en est de même pour les zones Z4 à Z6.

## Revendications

1. Equipement d'essai d'un démodulateur (8) d'un téléviseur récepteur de vidéographie (6) comprenant un générateur de signaux numériques d'essai (2) délivrant des paquets de données pseudo-aléatoires avec une première fréquence d'éléments binaires à un modulateur HF dont la sortie est reliée à l'entrée HF du téléviseur (6), et un récepteur (3) comportant un circuit de régénération de données à seuil variable commandable, l'entrée dudit récepteur (3) étant reliée à la sortie vidéo dudit démodulateur (8), caractérisé en ce que ledit générateur (2) émet des paquets de données pseudo-aléatoires avec deux éléments binaires de durée double à deux instants prédéterminés t1 et t2 de chaque paquet et en ce que ledit circuit de régénération des données dudit récepteur (3) comprend des moyens pour faire varier son seuil ligne par ligne d'une valeur maximale à une valeur minimale, ledit récepteur comportant encore une horloge d'échantillonnage (65) ayant une seconde fréquence plus basse que la première dans le rapport (n − 2)/n, où n est égal au rapport entier de la première fréquence à la fréquence ligne du téléviseur récepteur de vidéographie (6), des moyens (47, 64) pour assurer la resynchronisation de l'horloge d'échantillonnage au milieu de chaque ligne et un circuit de réception de données pseudo-aléatoires (63), dont la sortie délivrant un signal numérique pour chaque erreur détectée est reliée à l'entrée vidéo (9) du téléviseur (6).

2. Equipement d'essai suivant la revendication 1, caractérisé en ce que le générateur (2) comprend des moyens (19) pour engendrer une ligne de référence de données où tous les éléments binaires sont des 1 et en ce que le récepteur (3) comprend des moyens (46) pour détecter ladite ligne de référence et des premiers moyens (50) pour évaluer la valeur maximale du niveau de la ligne de référence, ladite valeur maximale étant utilisée dans un générateur de rampe (52) dont la sortie fixe le seuil dudit circuit de régénération des données (48, 53, 63).

3. Equipement d'essai suivant la revendication 1 caractérisé en ce que le récepteur (3) comprend des moyens (64) pour initialement mettre en phase l'horloge d'échantillonnage avec l'horloge des signaux reçus dudit générateur.

4. Equipement suivant la revendication 1 ou 2, caractérisé en ce que ledit générateur de rampe (52) comprend des moyens de commutation (99) fixant avant le début de la rampe et après la fin de celle-ci le niveau du seuil à la moitié de la valeur maximale.

5. Equipement suivant l'une des revendications 1 à 4, caractérisé en ce que les moyens (65, 64) pour initialement mettre en phase ladite horloge d'échantillonnage avec le train des signaux d'horloge reçus du générateur comprennent une horloge locale (65), des moyens (114) pour engendrer des impulsions de largeurs égales au retard entre chaque signal d'horloge locale et chaque signal d'horloge reçu, des moyens (115) pour charger en parallèle par un générateur de courant constant (117) deux condensateurs (C4, C5) ayant respectivement une armature à la masse et une armature isolée, les armatures isolées étant reliées par une diode (116), l'armature isolée à laquelle est appliqué directement le courant de charge étant également reliée à une première entrée d'un comparateur (118), l'armature isolée à laquelle est appliqué le courant de charge à travers la diode (116) étant également reliée à l'entrée d'un échantillonneur bloqueur (119) dont la sortie est reliée à l'autre entrée du comparateur (118), les moyens (114) engendrant les impulsions étant inhibés après un nombre déterminé de signaux d'horloge reçue, la sortie du comparateur (118) délivrant un signal quand le signal appliqué à sa première entrée dépasse le signal appliqué à sa seconde entrée, le signal de sortie du comparateur (118) étant alors en phase avec le train des signaux reçus.

6. Equipement suivant l'une des revendications 2 à 5, caractérisé en ce que le générateur de rampe (52) est constitué par un compteur numérique de lignes (91, 92) dont les sorties sont reliées aux entrées correspondantes d'un convertisseur numérique analogique (99) dont une entrée de référence analogique reçoit la valeur maximale du niveau de la ligne de référence et dont la sortie analogique est reliée à l'entrée d'un amplificateur linéaire (103) ayant un gain supérieur à 1 dont la sortie délivre le signal en forme de rampe.

## Claims

1. Test equipment for the demodulator (8) of a videotext television receiver (6) comprising a digital test signal generator (2) delivering pseudo-random digital data packets with a first bit frequency to an HF modulator whose output is connected to the HF input of the television set (6), and a receiver (3) having a data regeneration circuit with a controllable variable threshold, the input of said receiver (3) being connected to the video output of the said demodulator (8), characterized in that said generator (2) transmits pseudo-random data packets with two double-intervaled bits at two predetermined instants $t_1$ and $t_2$ of each packet and in that said data regeneration circuit of the receiver (3) is comprised of means to vary its threshold line by line from a maximum value to a minimum value, said receiver also comprising a sampling clock (65) with a second frequency lower than the first in the ratio $(n − 2)/n$, where n is equal to the integral ratio of the first frequency to the line frequency of the videotext television receiver (6), means (47, 64) to ensure resynchronization of the sampling clock at the middle of each line and a pseudo-random data reception circuit (63), whose output providing a digital signal for each error detected is connected to the video input (9) of the television set (6).

2. Test equipment in accordance with claim 1, characterized in that the generator (2) is comprised of means (19) for generating a data reference line in which all the bits are 1's, and in that the receiver (3) has means (46) to detect said reference line and first means (50) for evaluating the maximum value of the reference line level, said maximum value being used in a ramp generator (52) whose output determines the threshold of the said data regeneration circuit (48, 53, 63).

3. Test equipment in accordance with claim 1, characterized in that the receiver (3) is comprised of means (64) to initially phase the sampling clock with the received signal clock of the said generator.

4. Test equipment in accordance with claim 1 or 2, characterized in that the said ramp generator (52) is comprised of switching means (99) fixing the threshold level before the beginning of the ramp and after the end of the ramp to one half the maximum value.

5. Equipment in accordance with one of claims 1-4, characterized in that the means (65, 64) to initially phase the said sampling clock with the clock train received from the generator is comprised of a local clock (65), means (114) to generate pulses of width equal to the delay between each local clock signal and each received clock signal, means (115) to charge in parallel by a constant current generator (117) two capacitors (C4, C5) respectively having one lead connected to ground and one lead insulated, the insulated leads being connected via a diode (116), the insulated lead to which the charging current is directly applied being also connected to a first input of a comparator (118), the insulated lead to which the charging current through the diode (116) is applied being also connected to the input of a sample and hold means (119) whose output is connected to the other input of the comparator (118), the pulse generating means (114) being inhibited after a given number of received clock signals, the output of the comparator (118) delivering a signal when the signal applied to its first input exceeds the signal applied to its second input, the output signal of the comparator (118) thus being in phase with the received signal train.

6. Equipment in accordance with one of claims 2-5, characterized in that the ramp generator (52) is constituted by a digital line counter (91, 92) whose outputs are connected to the corresponding inputs of a digital to analog converter (99) of which one analog reference input receives the maximum value of the reference line level and analog output is connected to the input of a linear amplifier (103) having a gain greater than 1 and whose output provides a signal in the form of a ramp.

**Ansprüche**

1. Prüfeinrichtung für einen Demodulator (8) eines Videotext-Fernsehempfängers (6), mit einem digitalen Prüfsignal-Generator (2), der pseudo-zufällige Datenpakete mit einer ersten Bit-Frequenz an einen HF-Modulator liefert, dessen Ausgang mit dem HF-Eingang des Fernsehempfängers (6) verbunden ist, und mit einem Empfänger (3), der eine Daten-Regenerationsschaltung mit einer steuerbaren, veränderbaren Schwelle enthält, wobei der Eingang des Empfängers (3) mit dem Videoausgang des Demodulators (8) verbunden ist, dadurch gekennzeichnet, daß der Generator (2) pseudo-zufällige Datenpakete mit zwei Bits von doppelter Dauer bei zwei vorgegebenen Zeiten $t_1$ und $t_2$ jedes Paketes aussendet, und daß die Daten-Regenerationsschaltung des Empfängers (3) Mittel enthält, um seine Schwelle von Zeile zu Zeile von einem maximalen Wert zu einem minimalen Wert zu ändern, daß der Empfänger ferner eine Auftast-Taktschaltung (65) mit einer zweiten Frequenz enthält, die kleiner als die erste im Verhältnis (n − 2)/n ist, wobei n gleich einem ganzzahligen Verhältnis der ersten Frequenz zur Zeilenfrequenz des Videotext-Fernsehempfängers (6) ist, daß Mittel (47, 64) vorgesehen sind, die für die Resynchronisation der Auftast-Taktschaltung in der Mitte jeder Zeile sorgen, und daß eine Schaltung (63) zum Empfang der pseudo-zufälligen Daten vorgesehen ist, deren Ausgang, der für jeden festgestellten Fehler ein digitales Ausgangssignal liefert, mit dem Videoeingang (9) des Fernsehempfängers (6) verbunden ist.

2. Prüfeinrichtung nach Anspruch 1, dadurch gekennzeichnet, daß der Generator (2) Mittel (19) enthält, um eine Datenbezugszeile zu erzeugen, in der alle Bits eine « 1 » sind, und daß der Empfänger (3) Mittel (46) enthält, um die Bezugszeile festzustellen, sowie erste Mittel (50) zur Ermittlung des maximalen Wertes des Bezugszeilenpegels, der in einem Sägezahngenerator (52) verwendet wird, dessen Ausgang die Schwelle der Daten-Regenerationsschaltung (48, 53, 63) bestimmt.

3. Prüfeinrichtung nach Anspruch 1, dadurch gekennzeichnet, daß der Empfänger (3) Mittel (64) enthält, um anfänglich die Auftast-Taktschaltung in Phase mit dem Takt der von dem Generator empfangenen Signale zu bringen.

4. Prüfeinrichtung nach Anspruch 1 oder 2, dadurch gekennzeichnet, daß der Sägezahngenerator (52) Schaltmittel (99) enthält, die den Schwellwertpegel vor dem Beginn des Sägezahns und nach dem Ende des Sägezahns auf die Hälfte des maximalen Wertes festlegen.

5. Prüfeinrichtung nach einem der Ansprüche 1 bis 4, dadurch gekennzeichnet, daß Mittel (65, 64), die anfänglich die Auftast-Taktschaltung mit der vom Generator empfangenen Taktkette in Phase bringen, aus einem örtlichen Taktgeber (65) bestehen, sowie aus Mitteln (114) zur Erzeugung von Impulsen, deren Breite gleich der Verzögerung zwischen jedem örtlichen Taktsignal und jedem empfangenen Taktsignal ist, und aus Mitteln (115), um parallel mittels eines Konstantstrom-Generators (117) zwei Kondensatoren (C4, C5) aufzuladen, von denen jeweils eine Zuleitung mit Masse verbunden und eine isoliert ist, daß die isolierten Zuleitungen über eine Diode (116) verbunden sind, daß die isolierte Zuleitung, der direkt der Ladestrom über die Diode (116) zugeführt wird, ferner mit einem ersten Eingang einer Vergleichsschaltung (118) verbunden ist, daß die isolierte Zuleitung, der der Ladestrom über die Diode (116) zugeführt wird, ferner mit dem Eingang von Auftast- und Haltemitteln (119) verbunden ist, deren Ausgang mit dem anderen Eingang der Vergleichsschaltung (118) verbunden ist, daß die Mittel (114) zur Erzeugung der Impulse nach einer vorgegebenen Anzahl von empfangenen Taktimpulsen gesperrt sind, und daß der Ausgang der Vergleichsschaltung (118) ein Signal liefert, wenn das dem ersten Eingang zugeführte Signal das dem zweiten Eingang zugeführte Signal überschreitet, wobei das Ausgangssignal der Vergleichsschaltung (118) in Phase mit der empfangenen Signalkette ist.

6. Prüfeinrichtung nach einem der Ansprüche 2 bis 5, dadurch gekennzeichnet, daß der Sägezahngenerator (52) durch einen digitalen Zeilenzähler (91, 92) gebildet ist, dessen Ausgänge mit entsprechenden Eingängen eines Digital/Analog-Umsetzers (99) verbunden sind, dessen einer analoger Bezugseingang den Maximum-Wert des Bezugszahlenpegels empfängt, und dessen analoger Ausgang mit dem Eingang eines linearen Verstärkers (103) verbunden ist, der eine Verstärkung von mehr als « 1 » hat, und dessen Ausgang ein Signal in Form eines Sägezahns erzeugt.

0 029 780

FIG.1a

FIG.1b

1

# FIG.2

FIG.3 a

FIG.3 b

FIG.3 c

FIG.3 d

FIG.3 e

0 029 780

# FIG.4

# FIG.5

de 44

76

77

78

H

Q

Q̄

55

80

H

Q̄

79

54

# FIG.6a

81

82

$V_{max}$

$V_{moyen}$

# FIG.6b

81

82

# FIG.6c

83

84

Sortie  Q  de  78

# FIG.6d

Sortie  Q̄  de  80

# FIG.6e

Signal  de  54

FIG.7

FIG.16

Partie visualisée

Z2

Z3     Z4

Z6     Z5

Z1

t1            t0            t2

$64\mu s$

# FIG.8

# FIG.9

% de $V_{max}$
Sortie de 103                    Sortie de 91-92

| Sortie de 103 | Sortie de 91-92 |
|---|---|
| ≃ 114 | 255 |
| 100 | 228 |
| 90 | 208 |
| 80 | 188 |
| 70 | 168 |
| 60 | 148 |
| 50 | 128 |
| 40 | 108 |
| 30 | 88 |
| 20 | 68 |
| 10 | 48 |
| 0 | 28 |
| −14 | 0 |

# FIG.10

8

FIG.11

0 029 780

FIG.12a
FIG.12b

FIG.13a
FIG.13b
FIG.13c
FIG.13d
FIG.13e
FIG.13f
FIG.13g
FIG.13h

0 029 780

# FIG.14

vers 63    vers 57

de 54

$C_1$

H

123

$F_H$    126

124    H    Q

P    D

de 68

Q    125

P    D

# FIG.15a

# FIG.15b

# FIG.15c

# FIG.15d

# FIG.15e